Europäisches Patentamt

European Patent Office

Office européen des brevets

(11) Publication number: **0 306 549 B1**

# EUROPEAN PATENT SPECIFICATION

(45) Date of publication of patent specification: **18.12.91**     (51) Int. Cl.⁵: **B23C 5/22**

(21) Application number: **87113218.9**

(22) Date of filing: **09.09.87**

(54) **Improvements to the method of attaching removable cutting blades to machine cutters.**

(43) Date of publication of application:
**15.03.89 Bulletin 89/11**

(45) Publication of the grant of the patent:
**18.12.91 Bulletin 91/51**

(84) Designated Contracting States:
**CH DE FR GB IT LI SE**

(56) References cited:
**AT-B- 328 254          DE-A- 2 105 082**
**US-A- 1 663 894       US-A- 1 830 813**
**US-A- 2 567 167       US-A- 2 706 848**

(73) Proprietor: **Fabricacion de Herramientas y**
**Utensilios S.A. FHUSA**
**18, Poligono Industrial La Llagosta**
**Barcelona(ES)**

(72) Inventor: **Tua Espallargas, Antonio**
**Duquesa de Orleans, 48**
**Barcelona(ES)**

(74) Representative: **Klunker . Schmitt-Nilson .**
**Hirsch**
**Winzererstrasse 106**
**W-8000 München 40(DE)**

## Description

This Patent relates according to the precharacterising part of claim 1 to improvements of attaching removable blades to rotary cutters such as cylindrical milling cutters fitted with hard material tipped tools on the working face; see DE-A-2 105 082.

Known cutters as currently used consist of separate cutting blades which are not integral with the cutter body and can be separated from it, the whose assembly comprising therefore a support member and a number of cutting tool tips attached thereto. This arrangement allows for one or more of the tool tips, once they are worn or have become broken, to be removed and sharpened and then replaced in position on the cutter body.

Various methods of attaching the tool tips to the cutter body are in use but all of them require the services of the cutter manufacturer in order to carry out the operation of repairing the tools.

The improvements of attaching the removable blades to machine cutters having the features of claim 1 and which are the object of this invention present considerable advantages to the currently known existing practices. They allow the machine cutter body, such as that of a milling cutter to be fitted with a set of cutter blades or tool tips by means of an assembly offering complete security and easy replacement operation with the particularity that the cutting tool tips are not refitted to the body being disposable and are made from material with a very high hardness with the cutting edges coated with a thin layer of titanium nitride. They are so designed that once the cutting edges are worn by use, they can be detached from the body of the cutter, removed therefrom and discarded. They are then replaced by new blades, the entire operation being carried out by the operator in the factory without any necessity to send the cutter to the manufacturer for repair. Modern manufacturing techniques and consequent low costs obviate the advantage of re-utilization of the cutting tools after sharpening, the price of such an operation no longer being justified. Once used, the worn tool is discarded and replaced.

This procedure has the advantage that by not re-utilizing the cutting tools on the cutter and by simply replacing the tools or blades in the cutter, an operation that is both simple and economic, there is a saving in material as the cutter body remains in service only the cutting elements having to be renewed. The coating material, normally titanium nitride, is used in its entirety. Milling cutter tool replacement can be automatic with high speed operation and cutting rates, thus increasing production. Tool changes can be carried out by the machine minder operating the milling machine in which the cutter is fitted in accordance with the improvements related to the replaceable tools as described herein, thus obviating sending the cutter out to the manufacturer for dressing.

To facilitate the description drawings are attached showing by way of a non exclusive illustration one embodiment of the improvements of attaching removable cutting blades to machine cutters in accordance with the claims of this patent.

In the drawings:

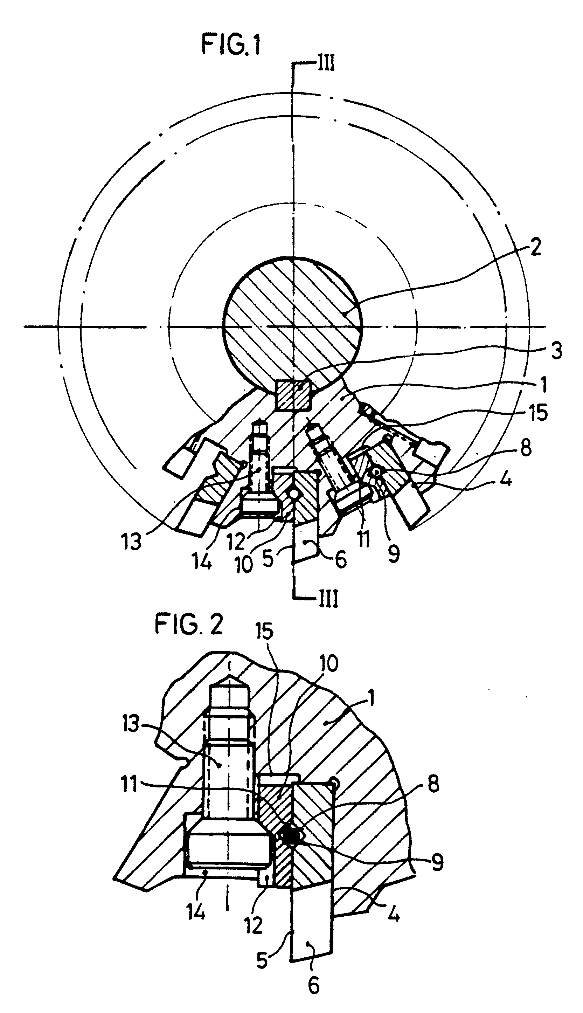

Figure 1 is a front view, in partial cross section of a machine cutting tool of the milling machine type of rotary cutter, carrying the improvements as described in this patent and Figure 2 is an enlarged scale detail of the assembly.

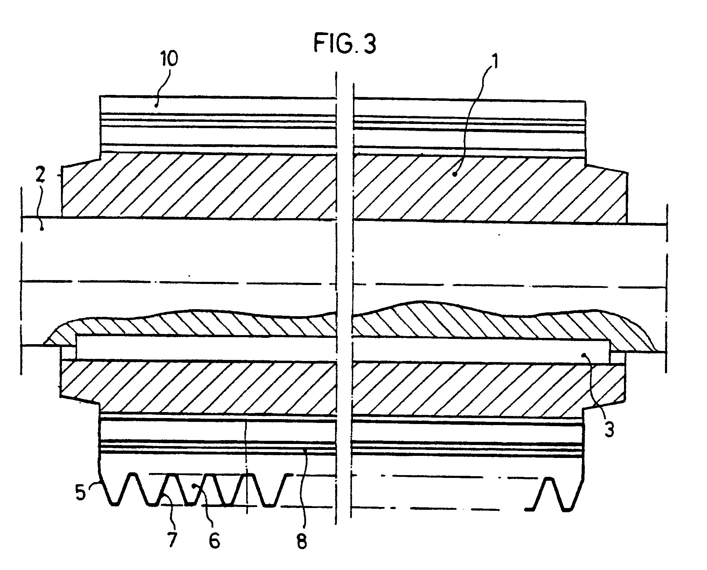

Figure 3 shows a longitudinal cross section on a plane III-III through the centre line on Figure 1 showing the described assembly system.

Figure 4 shows a partial cross section of the cutter to a larger scale without the cutting blades or the retention components.

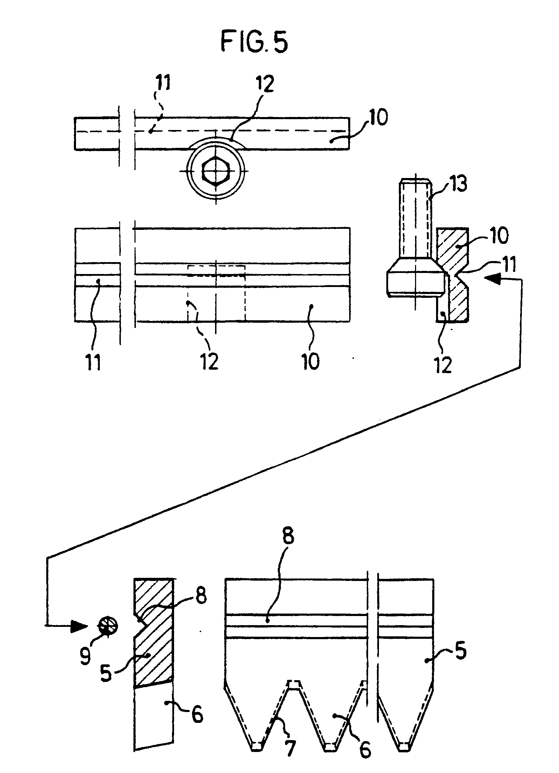

Figure 5 is a dihedral projection with cross sectional views of the cutting blades and the components acting as retention means.

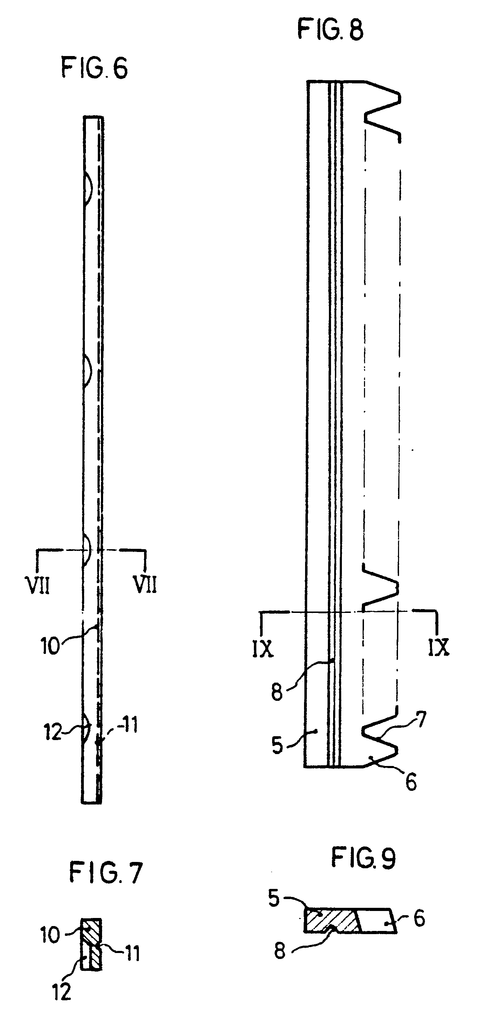

Figure 6 is a lateral projection of the retention component in the assembly of the cutting tool and Figure 7 is a cross section of the same on the plane VII-VII.

Figure 8 is a lateral view of one of the cutting blades, Figure 9 being a cross section of the same on the plane IX-IX of Figure 8.

The numbering on the drawings refer to the corresponding components of the cutter carrying the improvements in accordance with this patent as described below and similarly numbered.

The cutter to which the improvements as described have been applied, shown in the drawings in the form of a milling cutter of the rotary type consists of a cylindrical shaped body -1- with a central bore to take the machine arbor -2- on to which it is keyed by means of a conventional key -3-.

A plurality of slots -4- are provided in the cylindrical surface of the body -1- and which house, temporarily, the cutting tools -5- made from a steel having the appropriate properties and coated superficially, at least on the operating surfaces with a layer of titanium nitride, having a high hardness and constituting the operative part of the cutting element and hence of the milling cutter as a whole. These components are designed in such a manner that once worn by use, after their programmed utilization period which could coincide with the life of the titanium nitride coating, they are discarded without attempting to dress and they are then replaced by others wiht the same characteristics.

Each individual cutting blade -5- is in the form of an elongated prism, one of its edges being a series of projections -6- forming teeth designed to suit the milling operation programmed for the machine in question, the cutting edges -7- having the appropriate angle for the operation to be performed. One face of the element -5- has a longitudinal groove -8-forming a triangular section or Vee in which a longitudinal rod -9- is partially lodged for the purpose of securing the cutter element in its correct position.

The assembly arrangement of the blades -5-is completed by an elongated prismatic body -10- of the same length as the blades and also having a groove with a triangular or Vee cross section -11-, similar to -8-. The component -10- is held in its position by means of screws -13- the heads of which are located in the external part of the body -1- and in suitably dimensioned recesses -14- therein as well as in the recesses -12- in the retention component itself. Once the screws have been positioned and adequately tightened they act to secure the longitudinal component -10- against the cutting blade -5-, this together with the action of the rod -9-, ensuring that the blade remains solidly in its operating position.

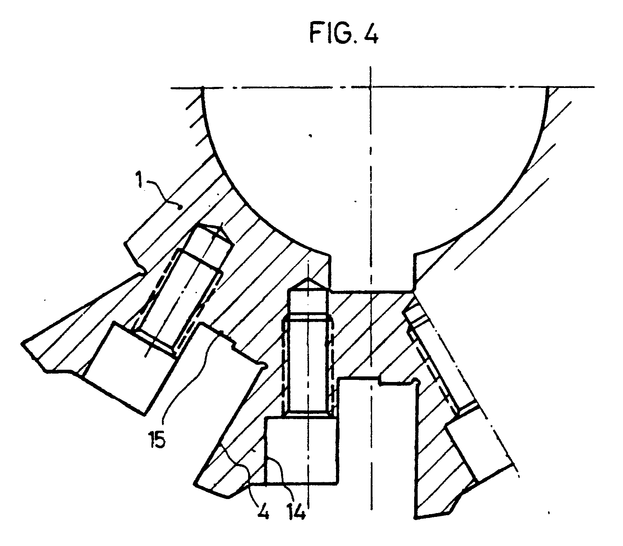

The retention components -10- stay lodged in the spaces-15-, adjacent to the spaces-4- which house the cutter blades -5- as may be seen in Figure 4.

The retaining screws -13- are so arranged that their ideal axes are coplanar and lie parallel to a radial plane ( that is: passing through the axis of the arbor bore), which is coincident with the plane of the surface of repose of the blade -5- and its corresponding retention component -10-.

Anything which does not alter, change, modify or otherwise affect the essentiality of the improvements herein described is to be considered a variable for the purposes of this invention patent.

## Claims

1. Machine cutter of the type comprising a cylindrical cutter head defining a substantially cylindrical surface, which includes a plurality of longitudinal slots (4) each receiving a cutting blade (5) and each being provided with a securing means (10, 13) for securing the cutting blade (5) within the slot (4), said securing means each including a longitudinal retention element (10) acting against the cutting blade (5), and laterally placed screws (13) engaged with the retention element (10) such that the retention element (10) and the cutting blade (5) are secured within the slot (4), characterized in that a longitudinal groove (8, 11) is provided both in the cutter blade (5) and in said retention element (10), said grooves commonly (8, 11) forming a space when the retention element (10) and the cutting blade (5) are disposed within the slot (4), and that an elongated rod (9) is inserted into said space.

2. Machine cutter according to claim 1, characterized in that each individual cutting blade (5) is in the form of an elongated prism with its length equal to that of the cylindrical cutter head (1) and having its functional surfaces, particularly the areas forming the cutting edges coated with a thin layer of a very hard material.

3. Machine cutter according to claims 1 or 2, characterized in that said retention elements (10) each have a prismatic section and having a length equal to that of the cylindrical cutter head.

4. Machine cutter according to any of claims 1, 2 or 3, characterized in that the heads of said srews (13) are lodged within spaces (14) provided in the cutter head (1) and in recesses (12) provided in a surface of the retention element opposite to said surface including said groove (11).

## Revendications

1. Machine du genre à couper comprenant une tête de coupe cylindrique définissant une surface sensiblement cylindrique, qui comprend une pluralité de fentes longitudinales (4), chacune d'elles recevant une lame coupante (5) et chacune d'elles étant munie de moyens de sécurité (10, 13) pour assurer la sécurité de la lame coupante (5) dans la fente (4), lesdits moyens de sécurité, comprenant chacun un élément de rétention longitudinal (10) agissant contre la lame coupante (5), et des vis placées latéralement (13) engagées avec l'élement de rétention (10) de façon à ce que l,élément de rétention (10) et la lame coupante (5) soient en sécurité à l'intérieur de la fente (4), caractérisé en ce qu'une rainure longitudinale (8, 11) est prévue de part et d'autre de la lame coupante (5) et dans ledit élément de rétention (10), lesdites rainures communes (8, 11) formant un espace lorsque l'élément de rétention (10) et la lame coupante (5) sont disposés à l'intérieur de la fente (4) et qu'une baguette allongée (9) est insérée dans ledit espace.

2. Machine à couper selon la revendication 1, caractérisé en ce que chaque lame coupante individuelle (5) a la forme d'un prisme allongé avec sa longueur égale à celle d'une tête coupante cylindrique (1) et ayant ses surfaces fonctionnelles, particulièrement les zones formant les bords coupants recouverts d'une fine couche d'un matériel très dur.

3. Machine à couper selon les revendications 1 ou 2, caractérisée en ce que lesdits éléments de rétention (10), ont chacun d'entre eux une section prismatique et une longueur égale à celle de la tête de coupe cylindrique.

4. Machine à couper selon n'importe lesquelles des revendications 1, 2 ou 3, caractérisée en ce que les têtes desdites vis (13) sont logées dans les espaces (14) prévus dans la tête coupante (1) et dans les replis (12) prévus dans une surface de l'élément de rétention opposé à ladite surface comprenant lesdites rainures (11).

**Patentansprüche**

1. Spanabhebendes Bearbeitungswerkzeug des Typs, der einen zylindrischen Schneidkopf aufweist, welcher eine im wesentlichen zylindrische Oberfläche definiert, die mehrere Längsschlitze (4) enthält, die jeweils eine Schneidplatte (5) aufnehmen und jeweils mit einer Sicherungseinrichtung (10, 13) zum Sichern der Schneidplatte (5) innerhalb des Schlitzes (4) ausgestattet sind, wobei die Sicherungseinrichtungen jeweils ein längliches Halteelement (10), das gegen die Schneidplatte (5) wirkt, und mit dem Halteelement (10) in Eingriff befindliche, seitlich angeordnete Schrauben (13) aufweisen, so daß das Halteelement (10) und die Schneidplatte (5) in dem Schlitz (4) festgelegt sind,
dadurch **gekennzeichnet,**
daß sowohl in der Schneidplatte (5) als auch in dem Halteelement (10) eine Längsnut (8, 11) vorgesehen ist, die Nuten gemeinsam (8, 11) einen Raum bilden, wenn das Halteelement (10) und die Schneidplatte (5) in dem Schlitz (4) angeordnet sind und daß in den Raum ein länglicher Stab (9) eingesetzt ist.

2. Bearbeitungswerkzeug nach Anspruch 1,
dadurch **gekennzeichnet,**
daß jede individuelle Schneidplatte (5) die Form eines länglichen Prismas aufweist, dessen Länge derjenigen des zylindrischen Schneidkopfs (1) gleicht und das seine Funktionsflächen, insbesondere die die Schneidkanten bildenden Flächen, mit einer dünnen Schicht aus einem sehr harten Material überzogen hat.

3. Bearbeitungswerkzeug nach Anspruch 1 oder 2,
dadurch **gekennzeichnet,**
daß die Halteelemente (10) jeweils einen prismatischen Querschnitt und eine der Länge des zylindrischen Schneidkopfs gleichende Länge aufweisen.

4. Bearbeitungswerkzeug nach einem der Ansprüche 1, 2 oder 3,
dadurch **gekennzeichnet,**
daß die Köpfe der Schrauben (13) in in dem Schneidkopf (1) vorgesehenen Räumen (14) sowie in Ausnehmungen (12) aufgenommen sind, die in einer Oberfläche des Halteelements ausgebildet sind, welche der die Nut (11) enthaltenden Fläche abgewandt ist.

**FIG. 1**

**FIG. 2**

5

## FIG. 3

FIG. 4

# FIG. 5

FIG. 8

FIG. 6

VII      VII

10

12      11

IX      IX

8

5      7

6

FIG. 7

10      11

12

FIG. 9

5      6

8